# EUROPEAN PATENT APPLICATION

(11) **EP 0 875 443 A2**
(43) Date of publication of application: **04.11.1998**
(21) Application number: 98201163.7
(22) Date of filing: 11.04.1998
(51) Int. Cl.: B62K 11/14, B62K 23/06, B62L 3/02

(54) **Hydraulic mechanism housed within a tubular element such as a motorcycle handlebar**

(30) Priority: 30.04.1997 IT MI971016
(71) Applicant: RIVA CALZONI S.p.A., Bologna (IT)
(72) Inventor: Montalto, Alessandro, Verbania Intra (Verbania) (IT)
(74) Representative: Raimondi, Alfredo, Dott. Ing. Prof.

(57) **Abstract**

Hydraulic group for operating brakes/clutches or the like which can be mounted on the handlebars (10) of a motorcycle or the like and can be operated by means of a lever (21) connected to one end of each tubular half (11) of said handlebars (10), comprising a cylinder (32) which is coaxially inserted in a sealed manner inside said tubular element (11) and which has, coaxially movable inside it, a first piston (31), the rod (31a) of which has opposite ends respectively fixed to mechanical means (23) for connection to the lever (21) and to a valve (33) co-operating with a second piston (34) for opening/closing a chamber (32a) for compression of the fluid operating the brake/clutch, to which the hydraulic group is connected via associated means (37, 38).

## Description

The present invention relates to a hydraulic group for operating brakes/clutches or the like, which can be mounted inside each tubular half of the handlebars of a motorcycle or similar vehicle and which can be operated by means of an external lever pivotably mounted on said half.

In the art of constructing handlebars for motorcycles and similar vehicles it is known that there exists the need for providing zones of the handlebars which are able to carry the pumps operating the braking systems and/or the clutch.

It is also known that the arrangement of said pumps on the handlebars causes numerous problems resulting from the space occupied by them, said occupied space adversely affecting the aerodynamic performance of the vehicle and imposing limitations on the constructional design of the dome piece.

The technical problem which is posed, therefore, is that of providing a pump operating group for braking systems and/or clutches of motorcycles and the like, which allows the external obstruction resulting from pumps of the known type to be eliminated from the handlebars of the vehicle.

Within the context of this problem a further requirement is that the pump operating group should be easy and simple to manufacture and should not require particular maintenance operations and that it should be able to be mounted on the normal existing handlebars without the need for special adaptation.

These technical problems are solved according to the present invention by a hydraulic group for operating brakes/clutches or the like, which can be mounted on the handlebars of a motorcycle or similar vehicle and can be operated by means of a lever connected to one end of each tubular half of said handlebars, said group comprising a cylinder which is coaxially inserted in a sealed manner inside said tubular element and which has, coaxially movable inside it, a first piston, the rod of which has opposite ends respectively fixed to mechanical means for connecting to the operating lever and to a valve co-operating with a second piston for opening/closing a chamber for compression of the fluid operating the brake/clutch, to which the hydraulic group is connected via associated means.

Further details may be obtained from the following description of a non-limiting example of embodiment of the invention provided with reference to the accompanying drawings in which:
Figure 1 shows a longitudinal section through a handlebar half with the hydraulic operating group according to the invention in the rest position;
Figure 2 shows a cross-section along the plane indicated by II-II in Fig. 1;
Figure 3 shows a cross-section along the plane indicated by IV-IV in Fig. 1; and

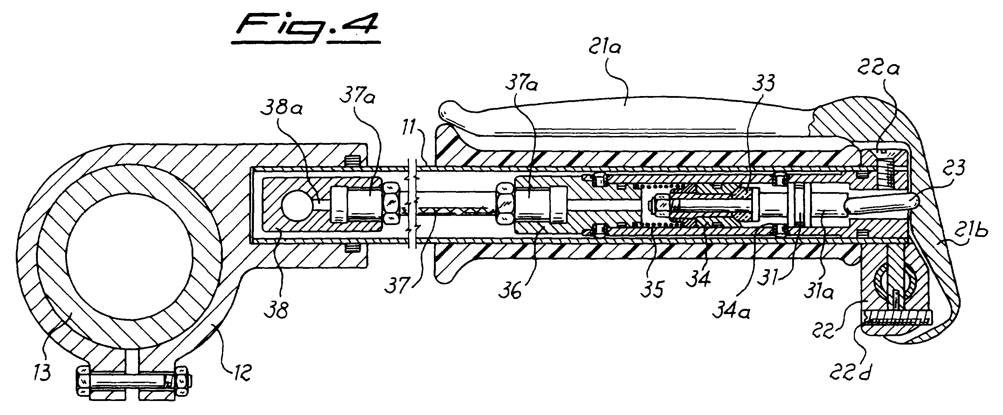

Figure 4 shows a longitudinal section similar to that of Fig. 1, with the hydraulic operating group in the working condition.

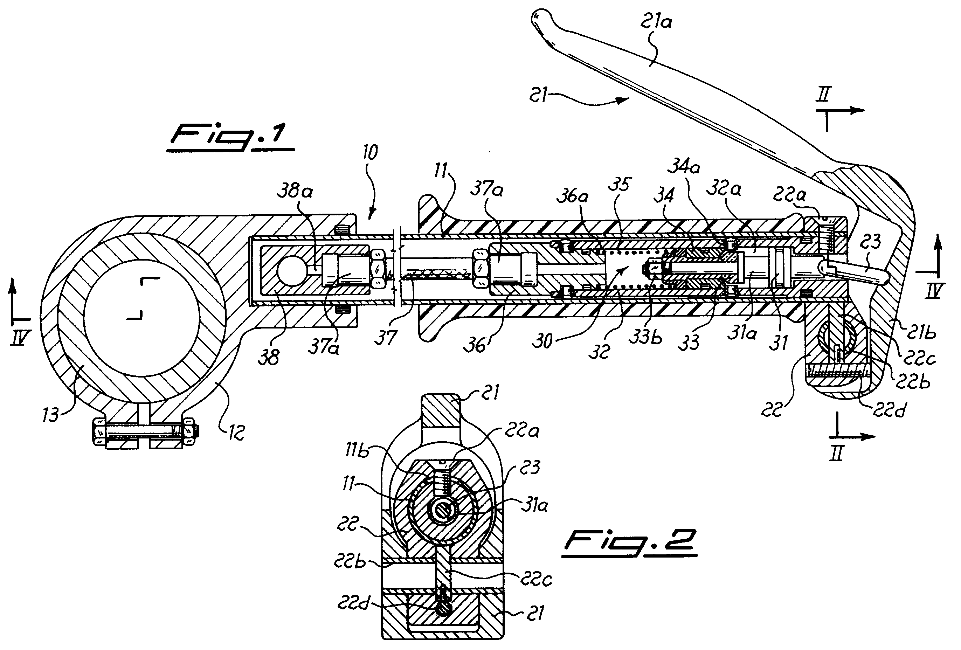

As illustrated in Fig. 1, the handlebars 10 of a motorcycle, not shown, consist of a tubular half-piece 11, one end of which is fixed to a sleeve 12 which can be clamped on the tube 13 forming the steering column of the motorcycle.

The opposite free end of the half-piece 10 has, connected to it, a lever 21 for operating a hydraulic actuating group 30 which is inserted longitudinally inside the tube 11 and described below.

Said lever 21 is formed in the shape of an "L", the long section 21a of which may be operated by the rider and the short section 21b of which is pivotably mounted on a mounting piece 22 for connection to the tube 11 to which it is fixed by means of a screw 22a.

Said mounting piece 22 carries the pivot 22b for rotation of the lever 21, which is held in position by the pin 22c which is in turn inserted between the tube 11 and the locking screw 22d.

A recess 11b provided in the tube 11 moreover allows the lever/cylinder group to be rotated through +/- 15° so as to adapt said parts to the individual ergonomic requirements of the different users.

The short section 21b of the said lever 21 is moreover fixed to one end of a connecting pin 23, the other end of which is connected to the rod 31a of a piston 31 sliding inside a cylinder 32 coaxially inserted inside the tube 11 and fastened in position with the latter, by the same screw 22a for fixing the mounting piece 22 of the lever 21.

A conical valve 33, made of soft material, is coaxially mounted onto the rod 31a and is locked on said rod 31a by means of a spacer 33a and a nut 33b screwed onto the rod 31a.

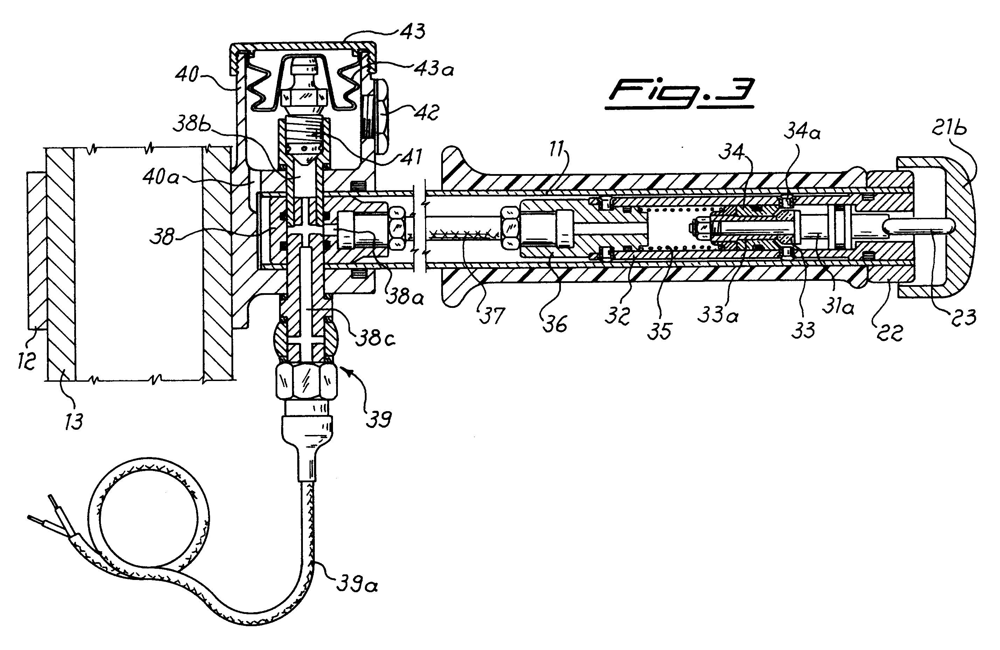

A second piston 34 is arranged inside the cylinder 32 in a concentric position with respect to the spacer 33a and, in the rest position (Figs. 1 and 3), is pushed in abutment against an end-of-travel stop 34a by a spring 35 which reacts against a corresponding abutment surface 36a of a hydraulic union 36 closing the chamber of the pumping cylinder 32. A flexible pipe 37 is engaged with the said hydraulic union 36, the other end being connected to a first path 38a of a second hydraulic union 38 of the three-way type. Said union 38 is also situated inside the tube 11 and its other two paths 38b,38c are respectively connected (Fig. 3) to a bleeding device 41 and to the pipe for connection to the brake calipers (not shown).

A pressure switch 39 is also connected to the union 38 and is designed to generate the electric signal for illumination of the rear brake lamp, to which it is connected by means of wires 39a.

The use of the flexible pipe 37, which is connected to the union 36 by means of rotating elements 37a, allows the already mentioned rotation through 15° of the cylinder 32 and results in a connection between the two hydraulic unions 36, 38 which is independent of any tolerances, also allowing the equipment to be rapidly and easily adapted to handlebars which are longer or which have bends of various types as in the case of "custom" motorcycles.

Said second union 38 also keeps separated, by means of associated seals 38d, the oil of the reservoir 40 from the oil under pressure which, passing inside it, actuates the brake.

Said reservoir 40 is placed in communication, by means of the hole 40a, with the chamber enclosed inside the tube 11 and therefore, by means of a hole present in the end-of-travel stop 34a, with the chamber 32a of the cylinder 30.

Since the quantity of oil which circulates inside the tube 11 around the unions 38, 36, pipe 37, cylinder 32 and inside the chamber 32a of the cylinder 32 upstream of the valve 33 is more than sufficient for causing operation of the brakes, the reservoir 40 may have extremely small dimensions since, in addition to containing a limited quantity of oil, it must only allow seating of a filling cap 43 provided with a membrane 43a for separating the free surface of the fluid from the air and a cap 42 for viewing of the maximum and minimum filling levels.

The actuating group according to the invention operates as follows:
- During normal travel conditions (Figs. 1 and 3), the lever 21 is rotated outwards with respect to the tube 11 of the handlebar half 10 and the rod 31a of the piston 31 is displaced towards the outer end of the tube 11 so that the valve 33 is detached from the piston 34 and the latter is pushed in abutment against the end-of-travel stops 34a by the spring 35.
   As mentioned, the oil from the reservoir fills the tube 11 and enters through the holes of the end-of-travel stops 34a into the chamber 32a.
- Should it be necessary to operate the brakes, the rider rotates towards the tube 11 the lever 21 which, by means of its section 21b, pushes the connecting pin 23, and therefore the rod 31a, towards the inside of the tube 11.

The travel of the rod 31a causes closing of the valve 33 and displacement towards the inside of the piston 34 with consequent compression of the oil which comes from the reservoir 40 through the hole 40a and which, flowing through the pipe 37 and the union 38, will operate the brakes and cause the lamp to light up via the pressure switch 39.

It is therefore obvious how the brake operating group according to the invention results in a considerable reduction in the space occupied on the outside of the handlebars, enabling the aerodynamic performance of the motorcycle to be improved and allowing the mounting of dome pieces with a more advantageous design.

In addition to this, owing to the separation between the internal pumping part, which encloses the fluid, and the lever group 21, together with its mounting piece 22, it is possible to remove the mounting piece itself by simply unscrewing the screw 22a, for example in order to replace the throttle grip, independently of the hydraulic group, which remains instead in position.

From the above description it also emerges how it is possible to reduce the number of external seals between the tube 11 and the hydraulic group 30, particularly in the region of the reservoir mounting, and thus the number of machining operations carried out on the tube in order to form seats and the like, resulting in lower production and installation costs.

Although described for mounting of the operating lever on the outside end of the handlebars, the hydraulic group according to the invention is also obviously applicable to operating lever mounting systems located between said free end of the tube and the point where the said tube is attached to the steering column; in this case it will be sufficient to envisage a cross-section of the tube 11 which will allow the passage of mechnical or hydraulic transmission means.

This transmission system will allow the operating group to be adapted also to handlebars of the conventional type in which the brake operating lever has its free end directed on the same side as the free end of the handlebar tube.

Finally it is possible to envisage the application of external protection means to the group according to the invention, designed to prevent breakage thereof in the event of the motor vehicle falling over.

Since said means are within the grasp of a person skilled in the art, they are neither described nor illustrated in detail.

## Claims

1. Hydraulic group for operating brakes/clutches or the like, which can be mounted on the handlebars (10) of a motorcycle or the like and can be operated by means of a lever (21) connected to one end of each tubular half (11) of said handlebars (10), characterized in that it comprises at least one cylinder (32) which is coaxially inserted in a sealed manner inside said tubular element (11) and which has, coaxially movable inside it, a first piston (31), the rod (31a) of which has opposite ends respectively fixed to mechanical means (23) for connection to the operating lever (21) and to a valve (33) co-operating with a second piston (34) for opening/closing a chamber (32a) for compression of the fluid operating the brake/clutch, to which the hydraulic group is connected via associated means (37, 38).

2. Group according to Claim 1, characterized in that said valve (33) is locked on said rod (31a) by means of a spacer (33a) and a nut (33b) screwed onto the rod (31a) itself.

3. Group according to Claim 1 or 2, characterized in that said valve (33) is a conical valve made of soft material.

4. Group according to Claim 1, characterized in that said mechanical means for connecting the rod (31a) to the lever (21) consist of a connecting pin (23), the opposite ends of which are respectively fixed to said rod (31a) and lever (21).

5. Group according to Claim 1, characterized in that said second piston (34) inside the cylinder (32) is moved translationwise by said rod (31a) against the thrusting action of resilient means (35) located coaxially between the piston itself and an element (36) for closing the chamber of the cylinder (32) on the opposite side to the lever (21).

6. Group according to Claims 1 and 5, characterized in that said resilient means (35) keep the second piston (34) in abutment against an end-of-travel stop (34a) provided with a hole communicating with the outside for supplying the operating fluid from a reservoir (40).

7. Group according to Claims 1 and 5, characterized in that said element for closing the chamber (32a) of the cylinder (32) consists of a hydraulic union (36).

8. Group according to Claim 1, characterized in that the said hydraulic union (36) has, mounted on it, one end of a pipe (37), the other end of which is connected to a first path (38a) of a second hydraulic union (38) of the three-way type inside the tube (11).

9. Group according to Claims 1 and 8, characterized in that said pipe (37) is flexible.

10. Group according to Claims 1 and 8, characterized in that the other two paths (38b, 38c) of the second hydraulic union (38) are connected respectively to a bleeding device (41) and to the pipe for connection to the brake calipers/clutch.

11. Group according to Claims 1 and 8, characterized in that said union (38) keeps separated by means of associated seals (38d) the fluid of the reservoir (40) from the fluid under pressure of the cylinder (32).

12. Group according to Claims 1 and 8, characterized in that the union (38) also has, connected to it, a pressure switch (39) designed to generate the electric signal for illumination of the rear brake lamp to which it is connected by means of wires (39a).

13. Group according to Claims 1 and 8, characterized in that said pipe (37) is connected to the hydraulic unions (36,38) by means of rotating unions (37a).

14. Group according to Claim 1, characterized in that said lever (21) is pivotably mounted on the tube (11) by means of a mounting piece (22) fixed by means of a radial screw (22a).

15. Group according to Claims 1 and 14, characterized in that said mounting piece (22) carries a pivot (22b) for rotation of the lever (21), which is held in position by a pin (22c) which is in turn retained between the tube (11) and a locking screw (22d).

16. Group according to Claim 1, characterized in that said tube (11) has a recess (11b) extending annularly so as to allow adjustment of the angular position of the lever (21).
